# DEMANDE DE BREVET EUROPEEN

(11) **EP 1 717 752 A1**
(43) Date de publication de la demande: **02.11.2006**
(21) Numéro de dépôt: 06290680.5
(22) Date de dépôt: 25.04.2006
(51) Int. Cl.: G06Q 30/00, H04Q 7/38

(54) **Procédé de diffusion d'information dans un système téléphonique cellulaire, et dispositif le mettant en oeuvre**

(30) Priorité: 25.04.2005 FR 0504144
(71) Demandeur: Anziani, Francois, Piedigriggio, 20218 (FR); Orsoni, Franck, Piedigriggio, 20218 (FR)
(72) Inventeur: Anziani, Francois, Piedigriggio, 20218 (FR); Orsoni, Franck, Piedigriggio, 20218 (FR)

(57) **Abrégé**

Système visant à conférer aux réseaux de Téléphonie cellulaires mobile des aptitudes particulières à la diffusion d'informations à tiers payant (institutionnelles, associatives, publicitaires, etc...).

Ce Système consiste en ce que chaque information diffusée est précédée de la diffusion d'un « message de marquage préalable » destiné à activer un canal d'écoute CB dédié, sur les terminaux portables destinataires de l'information à suivre, laquelle se trouve ainsi leur être réservée. Dans le Système, les terminaux destinataires sont ceux qui répondent aux trois conditions suivantes :
- Etre « adhérent » au Système ;
- Etre situé au moment de la diffusion à l'intérieur de l'aire géographique déterminée par le « client-commanditaire » de la diffusion.
- Posséder une des « identités SMAP » visées par le commanditaire de l'information à diffuser; identité SMAP résultant de l'association de trois types d'attributs sociologiques et personnels, sélectionnés par le commanditaire au sein d'un panel préexistant.

## Description

**Le système CB SMAP (Cell Broadcast à Sélection Multiple et Adhésion Préalable) a été imaginé pour favoriser l'émergence d'un marché de la diffusion de messages SMS / CB ou MMS /CB à tiers payant, et à intérêt géolocalisé, notamment publicitaires (publicité de proximité relative à tous les commerces de détail et de services aux personnes), associatifs (partis politiques, organisations syndicales, humanitaires, ...), ou institutionnels (toutes sortes d'informations citoyennes)...**

Le Système est conçu pour être intégré à un réseau de téléphonie mobile cellulaire public, quelque soit son standard (notamment les standards européens, GSM, E- GPRS, EDGE, UMTS) à la condition que ce réseau soit équipé d'une centrale de diffusion Cell broadcast et optionnellement d'une plateforme de configuration OTA.

Pour atteindre ces objectifs, le Système répond à plusieurs impératifs auxquels, à ce jour, les Services de diffusion d'informations, utilisateurs de la technique Cell Broadcast présents sur le marché, n'ont pas de réponses satisfaisantes :
1- Associer à la puissance de projection géolocalisée de la diffusion CB, une sélectivité suffisamment élaborée pour que le client commanditaire ait la faculté de définir, au cas par cas, pour chaque message à diffuser, le profil personnel et sociologique des usagers destinataires, la sélection étant toujours opérée au sein de l'ensemble de tous les « Adhérents au Système » situés au moment de la diffusion dans une des cellules de base du réseau constitutive de l'aire de diffusion définie par le commanditaire de la diffusion. Cela le Système SMAP le réalise avec une grande économie de moyens.
2- Mettre en oeuvre des dispositions techniques propres à assurer une gestion souple des canaux de diffusions CB, spécialement en ce qui concerne les diffusions opérées sous « standard vidéo » exigeantes en bande passante, et ainsi repousser le butoir au développement du Système qui pourrait résulter des limitations de la ressource radio.
3- Offrir aux usagers du réseau un niveau de service tel (la gratuité et la sélectivité évoquée ci-dessus y concourent, mais plusieurs autres facteurs d'attractivité leur sont associés), que puissent être conciliées deux exigences à priori antinomiques :
   + d'une part, des possibilités simples et pratiques offertes à l'usager, de refuser de recevoir les messages SMAP, ou de les consulter une fois reçus (exigence de nature tout à la foi éthique et légale) ;
   + d'autre part, nonobstant les moyens évoqués ci dessus, que séduits par ce qui leur sera proposé gratuitement par le Système, les usagers acceptent la réception et consultent effectivement, un flux de messages non sollicités au cas par cas, d'origine et de contenu éminemment diversifiés, **condition première de la réussite d'un model business_à tiers payant.**
4- Composer avec les lacunes de la standardisation en matière de diffusion CB, spécialement en ce qui concerne l'adaptation du Système à la « saisie » des itinérants.
5- Faire ainsi émerger un marché d'une dimension telle que, pour les opérateurs, la concurrence qui serait opposée aux « diffusions point à point » où « point-multipoint » actuellement développées, se traduise par un bilan global largement positif; **c'est une_seconde condition impérative de réussite pour le Système.**

**A ces fins, le Système met en oeuvre diverses innovations techniques et méthodologiques ; principalement :**
- **Une structuration particulière du « Profil personnel et sociologique » des adhérents, autorisant un ciblage fin des destinataires ;**
- **Un procédé et des dispositifs originaux de sélection des terminaux ciblés par le commanditaire de la diffusion, consistant à activer sélectivement sur chaque terminal ciblé, avant chaque message CB à diffuser, le canal CB de la dite diffusion, cette activation étant commandée par le Système au moyen d'un message CB binaire dit de « marquage » ;**
- **Des modalités de consultation des « messages clients » spécifiques autorisées par la constitution et l'enregistrement sur chaque terminal adhérent du « Turnover » des messages « vivants » à lui destinés ;**
- **Un ensemble de fonctions originales visant à fiabiliser le Système et à accroître son attractivité ;**
- **La mise en synergie systémique de ce qui précède.**

Le Système est donc conçu préférentiellement pour doter d'une instrumentation technique commune, un ensemble de produits de communication donnant lieu à prestations payées par des « clients commanditaires », comportant un vaste coeur de cible régi par des effets de proximité (proximité dans l'espace, le temps, le vécu au quotidien), et pour cette raison, idéalement servi par le media « Cell broadcast » avec sa géolocalisation intrinsèque, associée à la « personnalisation ressentie »dont se trouve investi « le portable ».

Il se positionne d'emblée comme concurrent de tous les supports actuels spécialisés dans l'information locale : radio et presse locale, publicité « boite à lettre », pages jaunes, affichage, bulletins et panneaux d'information communaux et de quartier... etc

A cela il ajoute des perspectives nouvelles en matière d'expression du lien social, par toutes les possibilités d'échanges d'informations en temps réel qu'il met à la disposition du monde associatif et, **de façon générale, de toutes les structures dont le fonctionnement implique des distributions régulières d'informations de masse, vers des cibles permanentes ou d'opportunité, tolérant des taux de pertes marginaux (usagers ciblés non atteints), et gratuites pour ceux qui les reçoivent.**

### II- DESCRIPTION DES ENTITES CONSTITUTIVES DU SYSTEME SMAP.

### - OBSERVATIONS PREALABLES.

**1** - Nous désignons par « plateforme SMAP» l'ensemble des moyens réunis au sein du réseau pour servir spécifiquement le Système.
**2**- Nous utiliserons dans la présente requête le terme de « moyen » pour désigner certains sous ensembles (dispositifs et procédés) destinés à assurer telle ou telle fonction dévolue à la plateforme SMAP ; nous leurs attribuons une dénomination (MIC, MIP, MRC, MRGE, etc ...). Nous soulignons que ces regroupements pourraient être opérés différemment sans pour autant n'être en rien substantiellement différents de ce qui est présenté ici. Nous utiliseront le terme de « module » pour désigner les sous-ensembles installés sur les terminaux adhérents et qui permettent le fonctionnement du Système.
3- Toutes les fonctions principales mises en jeux par le concept CB SMAP sont susceptibles de se greffer à l'identique sur les diverses générations de réseaux de téléphonie cellulaire (que ces fonctions soient introduites dans le réseau afin de configurer le Système SMAP, ou bien que lui préexistant dans le réseau, elles soient utilisées par lui ; par exemple, les HLR, VLR, serveur OTA, SMS Center...).
4- Le concept est indépendant de la nature des rapports contractuels liant le gestionnaire du réseau et le gestionnaire du Système. Néanmoins, l'utilisation par le Système, selon des modalités qui lui sont propres, des fonctions du réseau sus évoquées en 2, implique, en tout état de causes, un haut degré d'intégration de la plateforme SMAP au réseau. Ce haut degré d'intégration est illustré, en particulier, par les possibilités de mixité et de déconcentration des éléments de la plateforme SMAP, évoquées aux 5 et 6 ci-après.
5- Les fonctionnalités caractéristiques du Système SMAP se réduisent à des traitements classiques de l'information, particulièrement la création de fichiers de données, et leur gestion au moyen de logiciels spécifiques. Les outils de traitement, constitutifs des dispositifs (processeurs, système d'exploitation, mémoires, entrées /sorties...) pourront généralement être partagés entre plusieurs fonctions du Système, voire avec d'autres fonctions du Réseau.
6- Dans ce qui suit nous exposeront successivement :
   - Les cinq fonctionnalités (ou groupes de fonctionnalités) principales ; c'est leur articulation qui constitue l'architecture du Système (cf. A, B, C, D, E ci-après);
   - Cinq fonctionnalités annexes ; elles visent, par divers moyens, à fiabiliser le Système et à lui conférer une attractivité maximale pour les usagers et les clients commanditaires (cf. F, J, K, L, M ci-après);
   - Une note typologique récapitulative des canaux logiques « point à point » et CB utilisés par le Système ;
   - Des moyens de messagerie communs à diverses fonctionnalités, mono ou bidirectionnels, entre plateforme SMAP et usagers ou adhérents (cf. N, O ci-après) ;
   - Certains dispositifs caractéristiques de la plateforme SMAP (cf. P ci-après).

### A- LA FONCTION PROSPECTION / ADHESION.

### 1- Elle a pour rôles de:

- **Proposer** aux usagers du réseau **d'adhérer au Système** ;
- **D'enregistrer leur réponse** et ainsi, constituer et tenir à jour, le **Répertoire des Adhérents (RA) ;**
Cet échange croisé d'informations entre le Système et les usagers abonnés du réseau peut être réalisé selon des modalités très diverses (courrier postal, courriel, interpellation téléphonique, messagerie vocales avec sollicitation de réponse codée au clavier ...etc ...). Nous privilégions et considérons comme parties intégrantes du Système les moyens automatiques collectifs et individuels explicités dans la présente description (cf. §M). Nous désignons alors par « **SMAP Zéro** » tout canal CBCH utilisé par le Système pour la diffusion des différents messages de proposition d'adhésion destinés aux usagés non adhérents.

### 2- Elle a pour effets de:

**a- Activer sur tous les Terminaux adhérents un ou plusieurs canaux d'écoute CB,** préférentiellement dédiés Système, ici dénommés génériquement **SMAP L.** Ils seront utilisés par le Système pour ses messages logistiques « push » (notamment les questions relatives au « paramétrage »), comme vecteur permanent de saisie collective des Terminaux adhérents.
**b- Susciter le chargement,** sur tous les Terminaux adhérents, **des modules de traitement de l'information spécifiques au Système** et nécessaires à son fonctionnement, à savoir : **MCR** (cf. C2), **MRGE** (cf. D), **MRT** (cf. M-1-b), **MMA** (cf. J), **MAE SMAP** (cf. K). Il pourra s'agir de téléchargement, de chargement « en boutique », ou en usine sur « pack opérateur ».
**c- Parallèlement initier le processus** visant à ce que consécutivement à leur adhésion les usagers ne soient plus invités à adhérer. Dans le cas d'une interpellation par diffusion sur SMAP Zéro, ce résultat peut être obtenu par désactivation dudit SMAP Zéro (préférentiellement par le truchement du MCR, cf. C2), ou bien par inhibition des effets du message de sollicitation (préférentiellement par le truchement du MIOM).
**d-** Eventuellement l'activation (notamment par manipulation au clavier) du canal SMAP+ (canal de diffusion du message CB de marquage), dans le cas où ce canal ne se trouve pas activé a priori sur tous les terminaux abonnés.

### 3- Note sur le Répertoires des Adhérents (RA).

II sera nécessaire pour l'exécution de certaines fonctions du Système de disposer d'une base de données que nous dénommons **Répertoire des Adhérents Profilés classés par Cellule de Domiciliation principale (RAP/CD).** Une particularités du Système est que celui-ci peut élaborer lui-même ce RAP / CD, et pour cela, dans certain cas, élaborer d'abord le Répertoire des Adhérents (RA), par le moyen de la procédure de Prospection / Adhésion.

En pratique deux situations pourront se rencontrer :
a- Le HLR du réseau comporte (soit indépendamment du Système, soit qu'il en soit doté en vue d'accueillir le Système) et met a disposition de ce dernier, la mention des cellules de « domiciliation principale » relatives à chacun des usagers (voir en « B-2 » la notion de « Domiciliation principale »). Dans ce cas, sera directement constitué, sans passer par un RA, **le Répertoire des Adhérents Classés par Cellule de Domiciliation (RA/CD).**
**b-** Si le HLR du réseau ne dispose pas de l'information de domiciliation dans les conditions indiquées ci-dessus, alors le RA sera constitué à partir cette fois-ci du **Répertoire des Usagers Non Adhérents Non Classés,** mis à disposition du Système par le réseau d'accueil. Dans ce schéma l'acquisition des informations de domiciliation, peut être traitée par la fonction de « Paramétrage », identiquement aux autres attributs sociologiques et personnels constitutifs de l'identité SMAP. Ce sera le code postal ou bien l'adresse complète, selon le choix du gestionnaire, qui sera transmis au Système par l'adhérent. La conversion du code postal (ou de l'adresse) en cellule(s) de domiciliation est réalisée au moyen de procédés analogues aux dispositifs de navigation routière par GPS. Ce sera par un échange de SMS push et pull (question / réponse), principalement au moyen du MIC, marginalement du MIP (cf. M), que seront sollicitées et recueillis les informations recherchées. Cependant tout autre mode d'acquisition des informations de géolocalisation extérieur au Système peut être utilisé concurremment ou en substitution, notamment les moyens de localisation du réseau.

Dans tous les cas les adhésions au Système se traduiront, au fil des réponses positives reçues (les propositions étant régulièrement renouvelées), par la dilatation continue au sein de l'ensemble des usagers, du sous ensemble unique des adhérents (unique, c.a.d. toutes classes d'informations-client diffusées, confondues), à l'intérieur duquel seront opérées des sélections préalables à chaque marquage / diffusion.

Dans tous les cas, également, le gestionnaire pourra substituer (partiellement ou totalement) aux procédés ci-dessus (lesquels confient au Système lui-même les fonctions de Prospection / Adhésion et de Profilage), tout autre procédé variant, notamment non automatisé, apte à composer et maintenir à jour les RA, RA /CD et RAP /CD.

### B- LA FONCTION DE PARAMETRAGE.

**Elle comporte trois volets distincts:**
+ C'est d'abord la fonction par laquelle est obtenu de chaque adhérent au Système, communication des informations sociologiques et personnelles constituant son « **identité SMAP** ». A cette fin un questionnaire standard sera adressé, principalement par SMS / CB (éventuellement par EMS ou MMS / CB) sur canal SMAP L, aux adhérents du Système; il pourra distinguer des questions impératives (auxquelles l'adhérent sera tenu de répondre sous peine de radiation) et des questions optionnelles. Ainsi, sera constitué le **Répertoire des Adhérents Paramétrés classés par Cellule de Domiciliation principale (RAP 1 CD)** à partir du RA / CD.
   Selon le choix du gestionnaire l'exercice de cette fonction est confié à un **Moyen d'Interpellation Collectif (MIC;** cf. M1), ou à un **Moyen d'Interpellation Personnalisé (MIP;** cf. M2), ou à une association des deux moyens. Le recours au MIC (donc à une diffusion CB) pour cette fonction, implique l'usage d'un questionnaire standard, identiquement reçu par tous les adhérents au Système à chacune des relances d'actualisation, portant sur tel attribut, ou tel ensemble d'attributs. Ce procédé comportera des rigidités évidentes ; pour cela, le gestionnaire pourra préférer recourir au MIP après les premiers paramétrages consécutifs aux premières campagnes de prospection / adhésion, de façon à personnaliser le processus d'extension, de parachèvement et de mise à jour, au plus près de chacune des situations particulières de chaque adhérent.
   Les réponses des adhérents seront prises en charge comme indiqué au M-1-b par le MEIOR (Moyen d'Enregistrement d'Identification et d'Orientation des Réponses).
+ C'est également dans cette fonction de paramétrage que nous classons la **création du RAP/CD** à partir du RA (ou du RA/CD), complété des informations recueillies par le MIC ou le MIP, comme évoqué ci-dessus.
+ Enfin, la fonction de paramétrage, comporte **l'inscription initiale et la mise à jour, sur l'UIM de chaque adhérent, de son identité SMAP.** Cette inscription sera opérée préférentiellement par le truchement du **Moyen de Configuration Résident** (cf. C2 ci-après) actionné par message de commande point à point adressé au terminal destinataire, et porteur de l'identité SMAP à inscrire, ou des éléments de sa mise à jour, cela sur commande automatique du système de gestion du RAP / CD.

### 1- Précisions terminolosgiues :

**-a- « Caractère générique »,** désigne tout type d'informations particulières à chaque usager, défini et collecté par le gestionnaire du Système, et dont le recueil constitue la fonction de « Paramétrage ». Il est pratique de les répartir selon trois catégories :
   + Les **«caractères de profil personnel »** ; par exemple : date de naissance, sexe, nom de famille, prénoms, diplômes scolaires et universitaires, certaines préférences, catégorie professionnelle, situation de famille, éléments de patrimoine, abonnements à des services thématiques extérieurs au Système illustratifs des centres d'intérêt de l'adhérent et répertoriés à cette fin par le gestionnaire, langues acceptées ... etc). La liste de ces caractères de profil personnel est définie par le gestionnaire du Système. Ce dernier décidera également pour chacun des caractères, si la réponse de l'adhérent est optionnelle ou impérative ;
   + Les **« cellules de rattachement géographique »** ; désignons par là les cellules auxquelles l'adhérent est lié par un titre quelconque d'intérêt, personnel ou objectif (domicile principal, résidence secondaire, motifs professionnels, familiaux ... etc.) **qu'il leurs reconnaîtra ;** ces cellules seront identifiées par les moyens indiqués au A-3-b. Le type - par excellence - de cette catégorie de caractères, est la cellule de domiciliation principale. Cette dernière qu'il y a tout lieu de choisir (en raison de l'importance de son rôle dans le processus de sélection) comme clé primaire d'organisation du RAP / CD, aura dans ce schéma un « caractère impératif ». Il sera pertinent de n'accorder aux autres cellules de rattachement qu'un statut de caractère optionnel. Ces dernières pourront être communiquées au gestionnaire par référence à une typologie élaborée par celui-ci ; dans ce cas là, on pourra parler de « structure du rattachement géographique » ; certains commanditaires pourront souhaiter cibler une structure de rattachement particulière ; une autre option consistera à ne pas différencier les rattachements optionnels, dans se cas on parlera de « groupement indifférencié ». Ces deux options concement aussi bien les informations stockées au RAP / CD, que les identités mémorisée sur les terminaux adhérents. Ainsi que nous le verrons plus loin, une précaution utile sera que le gestionnaire du Système limite le nombre de cellules de rattachement par adhérent.
   + Des **« caractéristiques de diffusion fermée »** ; il s'agit de critères définis et mis en oeuvre par le gestionnaire du Système, lorsque ledit gestionnaire entend conférer au Système la capacité de communiquer un même message à tous les usagers appartenant à un sous-ensemble particulier d'adhérents, et situés au moment de la diffusion dans une aire géographique donnée. Les critères de cette espèce seront donc l'appartenance de l'adhérent à tel ou tel sous-ensemble prédéterminé d'adhérents (militants de tel parti politique, membres de telle association locale ou nationale, demandeurs d'emploi inscrit à l'ANPE, ressortissant de telle nation étrangère, clients fidélisés de tel commerce ou service...).
   Il s'agit d'une dimension du paramétrage convenant tout particulièrement aux organisations de type associatif, pour diffuser des messages d'information à leurs adhérents, sympathisants, ayant droit, cibles particulières, etc .... **dans les conditions standard du Système à savoir, la gratuité pour les destinataires, et une garantie de réception directe limitée par l'exigence de leur présence dans l'aire de diffusion.** Les possibilités ainsi ouvertes conviendront tout spécialement aux organisations à fort effectif ; elles peuvent être entendues comme une prestation intermédiaire entre celles du service SMAP standard et certaines de ses extensions évoquées en V.
   Le procédé implique la création, par le gestionnaire du Système, de critères « appartenance à tel sous-ensemble d'adhérents ». L'attribut correspondant sera recueilli au moyen d'une des procédures standard de paramétrage.
   Toutefois, une procédure d'adhésion et/ou de paramétrage spécifique aux situations de l'espèce pourra également être mise en oeuvre en complément ou en substitution de la procédure standard (fonction A). Elle consiste pour le client commanditaire à communiquer lui-même au gestionnaire du Système, sous sa responsabilité, dans des conditions de sécurité juridique à préciser, le fichier des destinataires de ses messages. Dans ces cas là, sauf adhésion personnelle au Système de l'usage, ce dernier ne recevra que les messages diffusés par le(s) commanditaire(s) de l'espèce.
**-b- « Attribut »**, désigne la valeur (date de naissance, nombre d'enfants aux foyer ... etc ...) ou la détermination particulière (sexe, catégorie professionnelle, cellule de domiciliation principale, ... etc ...) d'un caractère générique.
   Dans le cas de critère de diffusion fermée, la notion d'attribut est conservée mais sa portée évolue ; elle rendra compte ici de partitions éventuelles du sous-ensemble considéré (par ex. telle organisation humanitaire voudra soit, s'adresser à l'ensemble de ses membres actifs soit, uniquement à ceux en charge d'un rôle particulier au sein de son organisation.
**-c- « Identité SMAP»** d'un adhérent, désigne la série des attributs (chacun identifiable, au sein de l'identité, par l'ordonnancement de cette dernière, et/ou la structure dudit attribut) relatifs à cet adhérent ; elle peut être **« ciblée »** par le client commanditaire, ou **« effective »** s'agissant d'un adhérent donné. Lorsque cette identité effective sera mémorisée sur le terminal, on la désignera par la locution **« identité SMAP résidente »**. Il sera parfois pratique de considérer l' **« identité profil »** constituée des seuls attributs de profil personnel.

Dans l'élaboration des questionnaires, il conviendra de privilégier autant que possible les formules à choix fermé ; plus simples à gérer, elles sont surtout plus dissuasives à l'égard du risque de réponses fantaisistes que ne le sont les réponses à choix ouvert.

### 2- Observations relatives à la «Domiciliation principale» :

Ce caractère générique (de la catégorie « rattachement géographique ») joue un rôle central dans le Système. Il vise en effet à identifier la cellule de base du réseau dans laquelle est habituellement domicilié l'adhérent considéré, et qui appartient ou non à l'aire **géographique ciblée**, celle à l'intérieur de laquelle sera opérée la diffusion CB des messages-client. En effet, du point de vue de l'adhérent, l'intérêt d'une diffusion à tiers payant sera, très généralement, fortement lié à sa domiciliation principale. On peut d'ailleurs concevoir un fonctionnement simplifié du Système qui limite le rattachement géographique à cette seule cellule. Son importance toute particulière justifiera l'usage préférentiel de créneaux horaires nocturnes pour la diffusion de catégories importantes de messages-clients (publicité de proximité, informations communales ou de quartier, communications administratives...). Observons à ce propos que la très grande majorité des services visés par le Système se trouve assujettie à des contraintes de temps qui s'accommoderont parfaitement de diffusions nocturnes, **les messages enregistrés sur les Terminaux étant consultables par les usagers, en pratique, dès le matin suivant.**

### 3- Le Répertoire des Adhérents Profilés classés par Cellule de Domiciliation principale (RAP/CD) :

La taille du RAP/CD évolue avec celle du RA/CD (ou du RA), dont il est issu. Les articles du RAP/CD comporteront au moins :
- Le numéro d'identification internationale de l'adhérent ;
- La série ordonnée des « attributs » de l'adhérent.

Ainsi qu'il a été dit plus haut, le choix préférentiel d'ordonner le RAP/CD selon la cellule de domiciliation principale résulte du rôle prééminent de cet attribut dans la logique du Système, les autres cellules de rattachement étant traitées comme attributs, (préférentiellement optionnels) participant à l'identité SMAP. Des formes variantes d'organisation du fichier des adhérents paramétrés peuvent être imaginées dés lors qu'elles permettront la mise en oeuvre des fonctionnalités du Système. ferra un usage permanent et intensif : L'information séquentielle continue de la FEP SD (cf. « G »).
**NB -** Une capacité de réponse des Terminaux adhérents, déjà évoquée à propos de la fonction Prospection / Adhésion sera a fortiori requise pour la fonction de Profilage. Elle devra satisfaire aux exigences suivantes :
- **une exigence de simplicité pour l'usager,** exigence qu'il convient de ne pas sous-estimer ; eu égard à la diversité des publics concernés, elle est un facteur important de réussite du Système.
- **un encadrement serré du processus** afin de limiter autant que possible les réponses fantaisistes : des question à choix fermé seront préférentiellement utilisées.
- **l'usage préférentiel d'un mode non connecté** qui se résolve en un échange de deux messages (Push CB et Pull point à point remontant) décalés dans le temps ; outre qu'il sera un facteur de simplification, il ménagera à l'usager un temps de réflexion dont il conservera la maîtrise, avant de donner sa réponse. Ce dernier aspect ne devrait pas être sans incidence positive sur la sécurité juridique du Système.

### C- LA FONCTION DE SELECTION / MARQUAGE

### 1- Les principes de la sélection.

**a- Le mode d'emploi des critères :** Les trois catégories de critères de sélection (de **Profil,** de **Rattachement géographique** et de **Diffusion fermée**) pourront être utilisés concurremment, séparément ou associés deux à deux.
   +L'identité « **Profil** » permet aux clients commanditaires qui le désirent de limiter la réception des messages-clients aux Terminaux situés dans l'aire géographique de diffusion **et** possédant un profil personnel et sociologique donné, caractérisé par une suite conventionnellement ordonné d'attributs profil.
   +Les critères de « **Rattachement** » permettent aux clients commanditaires qui le désirent de limiter la réception des messages-clients aux Terminaux situés dans l'aire géographique de diffusion **et** possédant telle structure de rattachement (ou bien tel groupement indifférencié de cellules de rattachement). La structure ou le groupement choisi par le client commanditaire sera ou non étendu à l'ensemble de la typologie arrêtée par le gestionnaire ; compte tenu de ce qui a été dit au B 2 ci-dessus, il s'agira fréquemment d'une « combinaison » réduite à la seule cellule de domiciliation principale.
   +Les critères d' **« Appartenance à tel ou tel sous-ensemble d'adhérents »,** permettent aux clients commanditaires qui le désirent de limiter la réception de leurs messages aux terminaux situés dans l'aire de diffusion et possédant dans leur identité SMAP l'attribut représentatif de leur appartenance à tel ou tel sous-ensemble d'adhérents répertorié par le gestionnaire du Système. Dans la suite du présent texte nous qualifierons ce type de messages, de **« messages à diffusion fermée »**
   **Un quatrième critère,** peut être évoqué, celui là à la fois non spécifique, implicite et systématique, il s'agit du critère de **Localisation** dans l'aire de diffusion au moment où celle-ci a lieu ; il résulte du mode de diffusion Cell broadcast opéré à la cellule près.
   **Le choix des critères de sélection dépendra du type d'information diffusée, et relèvera essentiellement du commanditaire.**
**b- L' « Agrégat ciblé » :** Les cas d'identité ciblée unique seront, en pratique, rarissimes. Très généralement c'est un ensemble d'identités, l' - agrégat ciblé - qui sera la cible du client commanditaire. Il résultera de l'association des attributs ciblés par ce dernier, chaque attribut ciblé étant caractérisé par son appartenance à des plages de valeurs, ou à une collection de déterminations.
**c- Les « modes d'expression » des attributs :** Chaque attribut pourra être affecté d'un des quatre « modes d'expression » suivants :
   **+ positif / Négatif :** D'une façon très générale les attributs constitutifs d'une identité SMAP ciblée, feront l'objet d'une désignation « positive » (telle tranche d'age, tel type d'activité professionnelle, telles préférences ...). Dans certains cas, il se pourra que le client-commanditaire trouve quelque intérêt à utiliser un mode désignation « négatif » pour tel ou tel caractère générique qui sera alors sélectif pour toutes les valeurs ou déterminations licites, **sauf** celles appartenant à tel sous ensemble de valeurs ou de déterminations désigné. En matière de Domiciliation par exemple (toutes les domiciliations, sauf celles situées dans telle zone géographique couverte par la diffusion), cette faculté revêtira un intérêt particulier en ce qu'elle permettra au client-commanditaire de ne toucher que les abonnés de passage et non domiciliés dans l'aire géographique de diffusion (les touristes, les festivaliers...), sans accabler les résidents permanents de messages qui ne les concerneraient pas. Dans le train d'informations diffusé constituant l'identité de l'agrégat SMAP ciblé, la valeur négative ou positive de chaque attribut pourra être aisément indiquée par un indice binaire qui lui sera associé, reconnaissable comme tel par le MCR (cf. D ci-après).
   **+ indifférent :** II rend compte de la décision du commanditaire de transmettre son message à des adhérents, quelle que soit la valeur ou la détermination de l'attribut considéré inscrite dans leur identité SMAP. Un indice binaire spécifique, inséré à l'identité de l'agrégat SMAP ciblé, ou plus simplement l'absence d'indication d'attribut sur le locus du caractère en cause, pourra coder cette information à l'intention du MCR.
   **+ Forcé :** Il rend compte de la volonté du commanditaire de conférer à telle valeur ou telle détermination de tel attribut, le statut de condition nécessaire et suffisante à la sélection de l'identité SMAP qui en sera porteuse. La réduction de l'identité SMAP ciblée à ce seul attribut, sera un moyen simple de coder l'ordre impératif de sélection à l'intention du MCR.
**d- Quelques illustrations des différents types de sélection:**
   Désignons les quatre catégories de critère, respectivement par **L, P, R, F** (pour : Localisation, Profil, Rattachement, diffusion Fermée), on peut envisager (le critère « L » étant systématique et obligatoirement positif, et abstraction faite des différenciations par « mode » pour les autres) des **sélections de huit types.** Elles ne présentent pas toutes le même intérêt pour des services à tiers payant. Par exemple, à titre d'illustrations:
      - **Les sélections de type LP,** conviennent particulièrement à des informations de proximité concernant tout type d'événementiel local, susceptible d'intéresser quelque adhérent que ce soit possédant un profil approprié, qu'il possède ou non une de ses cellules de rattachement à l'intérieur de l'aire ciblée.
      - **Les sélections de type LPR,** à tout type d'informations participant à l'activation du lien social (que leur initiative soit institutionnelle, associative, commerciale ou individuelle). On citera non limitativement : politique de la ville ; actions publiques et associatives dans les quartiers défavorisés ; prévention à l'égard de certains fléaux sociaux (MST, drogue, délinquance) ; tous types de bulletins d'information ou de liaison destiné à un public ciblé, alertes sanitaires diverses ; aides aux personnes dépendantes ; formes nouvelles de gestion des offres d'emploie ... etc ...

Ce sera de même le mode de sélection le mieux adapté à ce que nous nommons **« publicité de proximité au quotidien »**, concernant tous types de services ou de produits associés à une aire de chalandise géographiquement identifiable. Les magasins et services de chaîne, son concernés au même titre que les magasins et services indépendants.

On peut également envisager un service de petites annonces de type **« particulier à particuliers ».**
- **Les sélections de type LR,** conviennent aux mêmes catégories d'informations que celles visées par le type RLP, mais réduites aux cas où la sélection par profil sera peu ou pas pertinente (campagnes électorales, bulletins d'information communaux, ..., ou bien encore, par exemple, dans le cas d'un rattachement géographique professionnel et non plus domiciliaire, une publicité pour telle restauration rapide, ou tel moyen de transport domicile travail...).
- **Les sélections de type L,** à certains types d'alertes géolocalisées en « temps réel » (trafic routier, alertes météo, protection civile ...), à la gestion, également en temps réel de certaines manifestation de masse, ... etc.
- **Les sélections de types LPF, LPRF, LRF, LF :** elles sont toutes à disposition des instances de direction (d'animation, de gestion ...), du sous-ensemble considéré, quelle qu'en soit la nature. Elles se conjuguent à l'usage d'attributs spécifiques (cf. B-a) dernier alinéa), comme moyens de ciblage à la disposition des instances susvisées.

### 2- Le processus de la sélection-marquage

C'est par le moyen d'un message CB binaire - dit de «sélection / marquage» - diffusé dans une cellule de base (ou un ensemble de cellules de base), que le Système réalise conjointement la sélection et le marquage de tous les Terminaux adhérents porteurs d'une des identités SMAP ciblées, et situés dans l'aire géographique concernée. Ce procédé exige que préalablement à cette « sélection marquage » dont l'objet consiste à activer sur chaque terminal destinataire, le canal de réception CB (canal SMAP*) sur lequel le message-client associé (ou de la séquence de messages-clients associée) va être diffusé, que les Terminaux adhérents soient, consécutivement à leur adhésion, l'objet d'un double conditionnement :
- En premier lieu, que son identité SMAP soit inscrite et tenue à jour de façon permanente, sur l'UIM (Module Identité de l'Usager) de chaque adhérent. Cette inscription est initiée par le SG du RAP/CD à chaque mise à jour de ce dernier ;
- Pour ce faire, que soit préalablement installé sur le terminal adhérent, le **Module de Configuration Résident SMAP (MCR SMAP),** lequel aura pour premier rôle de procéder aux inscriptions et mises à jour des identités SMAP de chaque adhérent, sur message de commande point à point, initié par le SG du RAP/CD (cf. B troisième +).

Ce même Moyen de Configuration Résident aura pour rôle principal d'activer le canal CB de réception du message-client (canal SMAP*), comme suite à la réception d'un message de marquage incluant l'identité SMAP résidente du terminal en cause.

Ainsi, pour recevoir un message client, un terminal adhérent devra satisfaire aux trois conditions suivantes :
- **Etre situé dans l'aire ciblée par le message (condition inhérente à la CB) ;**
- **Etre porteur d'une, au moins, des identités SMAP ciblées.**
- **Etre dans un « état » qui autorise les réceptions.**
**Observations sur le MCR :** Le MCR se présente sous la forme d'un module inscriptible sur l'UIM de l'adhérent ou éventuellement sur une zone mémoire dédiéedu terminal, l'inscription pouvant être réalisée à la fabrication, ou ultérieurement lors de l'adhésion, en particulier par téléchargement. Il réagit à des commandes extérieures (SMS, CB, multicast, ou point à point) alphanumériques ou binaires, transmis sur tous types de canal descendant choisi par le gestionnaire du Système en accord avec l'opérateur du réseau d'accueil, ou bien à des manipulations au clavier.

Le MCR est un ensemble articulé de logiciels spécialisés, satisfaisant aux protocoles des cartes SIM / USIM des Terminaux mobiles (spécialement ceux régissant le microprocesseur et les mémoires), dont les entrés /sorties sont organisées dans le contexte de l'interface IUM / Terminal. Il intervient en particulier :

**En matière de Prospection - Adhésion :**
- comme nous l'avons vu (cf. A-2), optionnellement, dans le basculement SMAP *Zéro l SMAP L ;*

**En matière de Paramétrage :**
- par l'inscription et la mise à jour de l'identité SMAP résidente sur message de commande CB ou « point à point », initié par le SG du RAP/ CD ;

**En matière de Sélection - Marquage, par :**
- l'enregistrement du message CB de marquage, à lui communiqué par le sous-ensemble radio du Terminal mobile ;
- l'extraction des identités SMAP ciblées dont ce message est porteur ;
- la comparaison de l'identité SMAP résidente inscrite sur l'UIM de l'abonné, avec les identités SMAP ciblées ;
- dans le cas d'une correspondance au moins, il donne l'ordre au sous-ensemble synthétiseur du Terminal mobile d'activer le canal d'écoute CB, désigné par l'instance de gestion de la ressource radio du réseau, pour la diffusion du message CB client.

### En matière de Diffusion - Réception :

- la reconnaissance et l'orientation des messages SMAP de tous types ;
- la désactivation du canal SMAP* à l'issue de la réception du message-client (ou du train de messages-client) préférentiellement sur signal de fin de transmission à l'issu de cette dernière. Dans les cas de configurations stériles (configuration non suivies de réception pour diverses raisons -situation ou « état » du terminal notamment), la désactivation pourra être opérée par le MCR à l'issu d'un délai choisi par le gestionnaire.

En substance, le MCR SMAP est programmé pour réaliser au moins les deux types d'opérations suivants :
1-Relayer auprès des modules concernés du terminal, des ordres d'inscription ou d'effacement d'informations sur certaines zones mémoires gérées par ledit terminal.
2-Relayer auprès du sous-ensemble synthétiseur du terminal des ordres d'activation ou de désactivation de certains canaux d'écoute CB ;
... étant entendu que les ordres des deux catégories susmentionnées, pourront lui être transmis, soit par le sous-ensemble radio, soit par une manipulation clavier, soit encore par l'un de ses propres sous modules spécialisés.

Optionnellement, il pourra être confié à l'exercice de ces deux types de fonctions du Système, lors de la mise en place de celui-ci, l'installation sur les terminaux adhérents des autres modules logiciels nécessaires au fonctionnement du Système (MRGE, MRT, MMA, MAE SPAM)

### D- LE TRIPTYQUE « DIFFUSION CB / RECEPTION / MEMORISATION ».

Si le canal CB SMAP* de diffusion du message-client, n'est pas dédié de telle façon que le Terminal en ait la connaissance préalable (allocation de type statique), l'instance de gestion de la ressource radio du Réseau pourra trouver avantage à communiquer au C3GI (cf. E) les canaux CB à configurer pour la diffusion du message-client, canaux dont les références seront alors incluses, à destination du MCR, dans le message CB de Sélection/Marquage.

Ainsi qu'il a été dit, une forte majorité de messages SMAP seront diffusés sur des créneaux horaires nocturnes. Leur diffusion pourra être opérée sans objectif de regroupement par destination ou de concentration dans le temps, simplement régie (aléatoirement du point de vue du Système) par des dispositions de gestion de file d'attente, ou tout autre contrainte extérieure au Système voulue par le fonctionnement du réseau d'accueil. Cependant, l'opérateur (notamment pour des raison de gestion de la ressource radio), pourra trouver avantage à regrouper les messages en séquences enchaînées par cellule destinataire, le regroupement pouvant être organisé à différent niveau d'organisation de la structure du réseau (BTS, BSC, MSC, par exemple, dans le cas d'un réseau GSM).

Afin de maximiser les chances de réception, chaque diffusion (message de marquage + message(s)-client associé) pourra être réitérée.

L'enregistrement à mesure de leur réception des messages SMAP, et leur conditionnement aux fins d'exploitation par le MAE SMAP (cf. K ci-après) est assuré par le **Module de Réception et de Gestion des Enregistrement (MRGE)** ; ce dernier a plus précisément pour rôles de :
- Réceptionner les messages-client ;
- Eliminer les réitérations reçues ;
- Procéder à l'enregistrement des messages sur un espace mémoire dédié du terminal, sous formats et selon une organisation répondant aux exigences du MAE SMAP. Plusieurs modes d'ordonnancement sont envisageables ; ils résulteront principalement des croisements entre les choix du gestionnaire, en matière de **rubriques** (structuration et hiérarchie des thèmes), de **différentiation géographique** (fusion ou distinction des rubriques homologues relatives à plusieurs cellules de rattachement), **présentation des messages à diffusion fermée.**
- Gérer cet espace mémoire sous le double effet des deux flux, entrant et sortant, ce dernier résultant des effacements en fin de durée de vie qu'il reviendra au MRGE d'exécuter.
**NB :** Soulignons que ces modalités d'enregistrement de messages non modifiables et à durée de vie limitée, qui ont donc pour effet de **constituer et d'actualiser en permanence en « turnovers», la collection des messages vivants disponibles par cellule de rattachement pour chaque adhérent,** constituent un des traits les plus caractéristiques du Système, particulièrement adapté à ce que nous nommons « Information de proximité ».

### E- LA FONCTION D' INTEGRATION AU RESEAU.

Cette appellation couvre un ensemble multi-fonctionnel destiné à organiser la coopération des diverses composantes du Système, et l'intégration de ce dernier dans le Réseau d'accueil.

Les diverses fonctionnalités qu'il articule, sont rassemblées au sein d'un dispositif dénommé **Centre de Coordination, Contrôle, Gestion et Intégration (C3GI).** Ce dernier offre aux diverses fonctionnalités du Système des outils commun de computation (processeurs, mémoires, programmes utilitaires ...) et, d'autre part, il met en oeuvre des logiciels spécifiques de gestion, de contrôle et de coordination, notamment ceux chargés d'exécuter les tâches suivantes :

### a- En matière d'intégration au réseau :

- La gestion des entrées dans le Système ; notion qui concerne l'exploitant, mais qui pourrait également concerner le client annonceur (Voir ci-dessous les procédures d'entrée dans le Système) ;
- La présentation au Réseau des requêtes du Système en ce qui concerne l'émission des différents types de messages, toujours opérées strictement selon les protocoles en vigueur dans le Réseau ;
- La réception et l'exploitation des comptes rendus d'exécution émis respectivement par la Centrale CB, le serveur SMS ; éventuellement la plateforme de configuration OTA.
- La gestion des files d'attente (particulièrement du Système vers le Réseau) ;
- Les allocations (statiques et dynamiques) des canaux de tout types nécessaires au fonctionnement du Système, dans le cadre des contraintes et spécifications du réseau d'accueil ;
- Le regroupement et la concaténation des messges-client par cellules destinataires, lorsque ce mode d'agencement sera retenu et réalisé au niveau du réseau ;
- ... etc...

### b- En matière de coordination interne :

- La coordination des diverses fonctions du Système ;
- Particulièrement l'articulation entre marquage et diffusion ;
- L'allocation des moyens de computation aux diverses fonctions du Système, selon les sollicitations du plan de charge du Système ;
- ...etc...

### c- En matière de gestion :

- Ecrans de pilotage ;
- Tableaux de bord ; compte rendu d'exécution ; statistiques ... etc...

En ce qui concerne les **procédures d'entré dans le Système,** on observera qu'elles sont directement liées aux aspects organisationnels de la relation avec le client annonceur, notamment, son degré d'automatisation ; degré dont on peut supposer qu'il ira en croissant avec le développement du produit et les perfectionnements techniques. Les plus élevés de ces degrés pourront permettre aux clients annonceurs d'introduire eux-mêmes le message à diffuser dans le Système au moyen d'un terminal adapté et de protocoles spécifiques. Parmi d'autres, ces terminaux et ces protocoles pourront être ceux du réseau **Internet.**

En tout état de cause, l'entrée d'un message à diffuser en CB SMAP, comportera au moins les éléments suivants :
- Le corps du « message-client » à diffuser, conçu par le client annonceur;
- L'indication de la zone géographique ciblée voulue par le client annonceur, traduite (ou à traduire) en cellules de base ;
- Les identités SMAP visées, attachées au message, voulu par le client annonceur.
- Un identifiant SMAP à la fois « générique » (distinguant les messages SMAP de façon globale) et « catégoriel » (par sous type SMAP), permettant sa reconnaissance par les terminaux adhérents
- Un numéro d'identification par message, requis notamment par le fonctionnement de la messagerie SMAP (cf. J ci-après) ;
- La mention de la **« durée de vie »** du message, voulue par le commanditaire, au-delà de la quelle le message sera effacé de la mémoire du Terminal mobile (cf. MAE SMAP en « K »).

### F- DEUX FONCTIONS D'EVALUATION DES REPONSES PARAMETRAGE (FERP).

Il sera important que les réponses fantaisistes communiquées par les adhérents au moyen du MIC ou du MIP, soient repérées et fasse l'objet de réactions appropriées (observations, avertissements, radiations) de la part du gestionnaire, de façon à éviter qu'elles ne prolifèrent. A cette fin deux types de contrôle seront effectués :
**1- des contrôles systématiques de vraisemblance** sur les réponses aux questions relatives au profil, considérées isolément (ages, nombre de personnes composant le foyer...etc). L'appartenance à des domaines de vraisemblance prédéfinis sera un mode opératoire approprié.
**2- des contrôles de cohérence interne aux séquences** de réponses relatives à un critère donné. Ce type de contrôle exploitera les données enregistrées au AHE, dont le SG sera conçu pour produire les séquences à la demande de la FERP. Dans ce cas, un mode opératoire par sondage paraît le plus approprié.

Pour chaque critère peut être imaginé un ou plusieurs tests de cohérence ; ils seront essentiellement fondés sur des aspects de **permanence,** de **continuité, d'amplitude** et de **forme de variation,** etc ...

**Dans les deux cas, les messages « en réaction », seront transmis au moyen du MIP comme indiqué au « M-2 ».**

### G- LA FONCTION D' EVALUATION DES PERFORMANCES DE LA SELECTION PAR DOMICILIATION.

Le Système pourra être doté d'une **Fonction d'Evaluation des Performances de la Sélection par Domiciliation principale (FEP SD).** La notion n'aura évidemment de sens que dans le cas d'une sélection comportant le caractère « Domiciliation principale », ce qui sera un cas fréquent.

### 1-Définition.

Pour une zone de localisation « Z » donnée, un écart systématique existe entre l'ensemble [ADZ] des Adhérents Domiciliés en Z, extrait du RAP/CD, et l'ensemble [ULZ] des Usagers Localisés en Z à un instant donné, que la lecture de la TUUZ permet de connaître en continu. Désignons par **[ADLZ] (Adhérents Domiciliés et Localisés en Z)** l'intersection de ces deux ensembles, et par « y (t) » son effectif. La valeur de y résulte à chaque instant du nombre « n » d'usagers adhérents domiciliés dans la zone Z, diminué du nombre d'adhérents domiciliés dans la zone mais absents de cette zone lors de la sélection/diffusion.

Le rapport **i (t) = y (t)/n** est dénommé **« facteur de performance instantanée »** pour la zone Z.

Sa valeur moyenne durant un créneau temporel dt, noté « I (dt) », est dénommé **« Indice moyen de performance de la sélection par Domiciliation »** pour le créneau considéré, sur la zone Z. Il permet d'apprécier la proportion d'abonnés concernés par un message, mais ne le recevant pas du fait de leur localisation momentanément extérieure à l'aire de diffusion.

### 2-Acquisition des informations de performance.

Le relevé des couples « n ; y (t) » sera préférentiellement opéré à intervalles réguliers pour chaque zone de localisation du réseau; par la lecture du RAP/CD en ce qui concerne « n » ; par comptage de l'ADLZ, en ce qui concerne « y (t) (cf. PI. 5/7).

Un module de calcul élabore la série des I(dt) horaires - notés I(h)- et les consigne dans une **Table des Informations de Performance (TIP)** constituée en son sein ; par zone de localisation, les séries chronologique des « I(h) », seront structurées dans la TIP, sous forme calendaire.

Tout système standard d'interrogation, autorisera alors la tenue d'un **Tableau de Bord (TdB)** -détaillé et statistique- des aspects de performance de la sélection par Domiciliation principale, pour chaque zone de localisation du réseau, et par suite pour toute aire géographique constituée d'un ensemble de zones de localisations.

**L'ADLZ, le Module de Calcul, la TIP, son Système d'interrogation, ainsi que le Tableau de bord, constituent le MEP SD.**

### 3-Une exploitation majeure des informations de performance.

La connaissance de l'I(dt) selon diverses **séquences de créneaux homologues, pour une aire géographique donnée,** permet de classer les créneaux temporels par ordre de qualité (les créneaux horaires, sur une nuit donnée ; le classement moyen des créneaux horaires pour tel ensemble de nuits ; les nuits au cours d'une semaine donnée, ou en moyenne sur tel ensemble de semaines, etc...) ; de même, elle permet d'apprécier les variations de performances lors des vacances scolaires, certain week-end, le week-end moyen, etc...

**Un indice de pénétration potentiel (associant le taux d'adhésion et l'indice de performance moyen, pour une aire géographique et un créneau temporel donné), garanti à un client annonceur, peut constituer un argument commercialement attractif aux yeux des commanditaires.**

Par ailleurs toute variation tendancielle à la baisse de l'I(h), observée sur une séquence de créneau homologue, corrigée des variations du taux d'adhésion ainsi que de toutes les incidences d'origine événementielle, pourra être révélateur d'un dysfonctionnement du processus global de recueil des informations de domiciliation.

### H- LA FONCTION D'INCITATION A LA SELECTIVITE (FIS).

La réception en grand nombre de messages ne concernant que peu, ou pas du tout, les usagers récepteurs (conséquence d'une sélection insuffisamment ciblée), serait tout à la fois négative pour l'image du Système, et inutilement consommatrice en espace mémoire des Terminaux mobiles ; néanmoins, il y a tout lieu de penser qu'à tarif égal, les clients-commanditaires rechercheront spontanément la diffusion la plus large. L'incitation consistera donc, **pour une aire et une identité ciblée,** à corréler l'échelle des tarifs au rapport « population des adhérents ciblés / population totale des adhérents », rapport que nous dénommons. **« Incidence de Sélectivité ».**

Le Système devra être en mesure fournir ce rapport de façon prévisionnelle, pour toute aire ciblée associée à toute identité ciblée, cela à titre d'information tarifaire pour le commanditaire. Son calcul ne présente aucune difficulté au niveau du RAP/CD, le nombre d'adhérents dans une aire ciblée quelconque, ainsi que le nombre « n Pi », d'adhérents domiciliés dans la dite aire ciblée et possédant le profil « Pi » étant aisément accessibles pour peu que le RAP/CD soient munis des compteurs appropriés.

### J- LA FONCTION MESSAGERIE SMAP.

On désigne par là un procédé et un dispositif, permettant aux usagers qui - par suite de leur déplacement, n'auraient pas reçu tout ou partie des messages les concernant - de récupérer ces messages, à partir de quelque localisation que ce soit, au moyen d'un SMS d'appel spécifiquement codé. Le SMS sera adressé au Système, lequel, en réaction, transmettra à l'adhérent, **la collection des messages-client diffusés dans telle ou telle de ses cellules de rattachement, encore « vivants », correspondants à son identité SMAP, et non reçus par lui.**

Il pourra également être fait appel, par l'abonné, à la Messagerie SMAP, dans les cas où la non réception initiale des messages résulterait d'un « verrouillage SMAP » momentanément commandé par l'abonné (cf. « K » ci-après) ; également dans les cas où elle serait consécutive à une période d'extinction du Terminal, ou plus généralement à un « état » momentané du Terminal, tel que la réception n'aurait pas eu lieu.

Le dispositif consiste essentiellement en une capacité de mémoire vive dynamique, (vidéo ou non, selon le standard du réseau d'acceuil, et la nature des messages à y stocker) intégrée à la plateforme SMAP, physiquement centralisée ou au contraire déconcentrée par BSC (ou RNC), éventuellement par BTS (ou Node B). Dans tous les cas, les informations stockées seront structurées en premier niveau, par cellule de base destinataire des messages.

Cette capacité mémoire, dénommée **Base d'Enregistrement des Messages Clients (BEMC),** est équipée d'un système de gestion apte en particulier à :
- Enregistrer à mesure de leur diffusion, tous les messages-clients, affectés chacun de l'indication des identités SMAP ciblées, et **classés par cellule de base concernée par la diffusion.**
- Effacer les messages ayant épuisé leur « durée de vie ».
- Réceptionner, décoder, et transmettre les requêtes des adhérents.
- Repérer et présélectionner dans l'ensemble des messages-client « vivants » relatifs à la cellule de rattachement objet de la consultation, ceux correspondant à l'identité-profil de l'interpellant. Cette identité-profil pourra être saisie par lecture dans le RAP / CD, sur la base de l'identifiant de l'usager appelant laquelle sera intégrée au message d'interpellation diligenté par le MMA (voir ci-après).
- Extraire et communiquer au SMS Center pour transmission à l'adhérent interpellant, la séquence des numéros d'identification des messages ainsi présélectionnés. Réceptionner en retour la liste des numéros d'identification des messages présélectionnés et non encore parvenus à l'adhérent, liste communiquée par le MMA.
- Extraire les susdit messages de la BEMC et les communiquer au SMS (MMS) Center pour transmission à l'adhérent interpellant.

Outre la BEMC, le fonctionnement de la Messagerie SMAP nécessitera donc que les Terminaux adhérents soient équipés d'un dispositif spécialisé, dénommé **Module Messagerie Adhérent (MMA),** interlocuteur de la BEMC ; ses principales fonctions sont :
- Transmettre à la BEMC les requêtes des adhérents, par SMS spécifiquement codifiés ; chaque requête comportera essentiellement la mention de la cellule de base objet de l'interpellation et, éventuellement l'identité SMAP de l'interpellant.
- Réceptionner la série des numéros d'identification des « messages » vivants de la cellule de rattachement en cause destinés à un agrégat incluant l'identité SMAP du demandeur, liste transmise par la BEMC ;
- Extraire de cette série, par comparaison avec la collection des messages enregistrés, la liste des numéros d'identification des messages non reçus ;
- Communiquer cette dernière liste à la BEMC, par SMS muni des indications de reconnaissance nécessaires ;
- Réceptionner avec possibilité d'affichage immédiat ou différé l'ensemble des messages clients communiqués par la BEMC.
- Parallèlement à la réception susvisée, intégrer ces messages dans la zone mémoire réservée à la cellule de rattachement concemée, pour des consultations ultérieures au moyen des procédures banalisées de la FAE SMAP (cf. « K » ci-après) ;
**NB :** Il existe potentiellement, de la part des usagers certains modes d'utilisation non désirables (du point de vue du gestionnaire du Système) de la Messagerie SMAP, envers lesquels le Système devra se prémunir. Il conviendra en particulier **d'éviter une utilisation du Système peu compatible avec le business model « Tiers payant »,** consistant pour l'adhérent à pratiquer systématiquement une consultation « à la demande ». A cette fin, l'option « verrouillage » à l'égard de la réception des messages SMAP (cf. « K » ci-après), et l'option Messageries SMAP pourront être rendues incompatibles. Le choix, modifiable dans le temps, devra alors être proposé à l'usager au moment de son adhésion et inscrit à son identité SMAP.

Autre disposition de précaution, seuls les messages relatifs à une cellules de rattachement inscrite à l'identité SMAP de l'adhérent, pourront faire l'objet d'une consultation de la part de celui-ci ; un nombre maximum de cellules de domiciliation fixé par le Système sera une utile précaution.

Autre solution, sans remettre en cause le model business « Tiers payant » global du Système, l'utilisation des services de la Messagerie SMAP dans sa fonction normale de « récupération de messages », pourrait donner lieu à facturation. Cette facturation pourrait contribuer de façon décisive à conjurer les risques sus évoqués.

En revanche, c'est un autre model-business de l'exploitation des possibilités de la messagerie SMAP, qui est exposé au « V - 1 » ci-après.

### K- LES FONCTIONS D'ANIMATION DE L'ESPACE SMAP (FAE SMAP)

La consultation effective des messages SMAP par l'abonné qui les aura reçus, condition de l'efficacité du Système pour le client-commanditaire, n'est pas un pari gagné d'avance ; de même, avant cela, l'adhésion massive d'usagers pour lesquels la gratuité, la proximité, et l'adéquation supposée des informations diffusées à leur profil sociologique et personnel, ne seront peut-être pas des arguments suffisants pour accepter un flot de messages non sollicités au cas par cas, dispersés sur un spectre thématique largement ouvert.

Une incitation efficace sera que les consultations des messages enregistrés sur la zone mémoire dédiée du Terminal, soient opérées selon des modalités pratiques, conviviales et ludiques. Nous désignons par **Fonctions d'Animation de l'Espace SMAP (FAE SMAP)** l'ensemble des procédés participant à ces objectifs. **Il s'agit donc d'un ensemble fonctionnel important pour le succès du Système.** Ces fonctions sont mises en oeuvre par un module spécialisé chargé sur tous les Terminaux adhérents, le MAE SMAP.

L'éventail des options envisageables est très ouvert ; pour notre part nous retenons à titre de possibilités:
- **Une nomenclature SMAP,** élaborée par le gestionnaire du Système. Chaque message sera ainsi associé à une ligne de la nomenclature, de sorte que la séquence des messages enregistrés ainsi que leur consultation séquentielle soient ordonnées selon ladite nomenclature.
- Des **pages d'entête** attractives.
- Un procédé de **survol rapide des messages,** selon l'ordre séquentiel sus évoqué, la « rapidité » résultant d'une possibilité de « zapping » sur les pages d'entête, préférentiellement sans possibilité de « saut ». La durée de présence à l'écran de chaque page d'entête zappée pourra être assujettie à un minimum.
- En revanche il sera opportun que **les possibilités de zapping** des corps de message, fassent l'objet de restrictions réfléchies de la part du gestionnaire. Laissées au libre exercice de chaque adhérent, elles seraient peu compatibles avec le model-business « tiers payant », qui requiert une garantie de prise de connaissance minimum par le destinataire au bénéfice du commanditaire.
- Des fonctions **d'effacement** et **sauvegarde,** commandées message par message.
- Une fonction **Verrouillage 1 Déverrouillage** permettant à l'abonné de ne pas recevoir ou de ne pas enregistrer, momentanément, les messages SMAP.
- Des **procédé de personnalisation** par mention, sur les pages d'entête, (ou même inséré dans le corps des messages-clients en des sites réservés à cet effet) du nom de l'abonné (qu'il conviendra alors d'inscrire dans l' « identité SMAP » saisie sur l'IUM), et plus généralement par l'évocation de certains éléments de son identité SMAP ; tous ces procédés étant automatisés par le Système.
- Des **jeux de fidélisation** (via échanges de SMS notamment), conçus et mis en oeuvre selon des processus automatisés par le gestionnaire.
- Des dispositions favorisant **« l'objectif d'équiconsultation »** (situation idéale où tous les messages SMAP reçus par un adhérent seraient consultés sur des durées équivalentes) peuvent également être mis en place. Il passe par la définition d'un indicateur représentatif de la dispersion des temps de consultation ; un mécanisme de « reconnaissance des bon comportement SMAP » sur une période donnée (hebdomadaire par exemple) ; un système de « primes » pourra alors être instauré, au bénéfice des adhérents dont les pratiques de consultation auront été les plus satisfaisantes à cet égard.
- L'affichage sur manipulation clavier de l'identité SMAP résidente.

### L- RAPPEL DES ATTRIBUTIONS FONCTIONNELLES DES PRINCIPAUX CANAUX LOGIQUES UTILISES PAR LE SYSTEME.

**a-** On désigne par « canal SMAP + » tout canal CB, préférentiellement BCCH, du réseau d'accueil, activé en permanence (de façon non obligatoirement exclusive) sur les terminaux adhérents (que l'allocation en soit dynamique ou statique), sur lequel sont diffusés les « messages de marquage » préférentiellement binaires, ayant pour fonction d'activer, par le truchement du MCR, le « canal SMAP * », sur les terminaux des adhérents ciblés.
**b-** On désigne par « canal SMAP * » tout canal CBCH du réseau d'accueil, activé sur les terminaux adhérents ciblés comme indiqué en « a » par le message de marquage, et destiné à diffuser les « messages-clients associés » ; selon le standard du réseau et secondairement le choix du commanditaire de la diffusion, ces messages pourront être alphanumériques ou vidéo.
**c-** On désigne par « canal SMAP Zéro » tout canal CBCH utilisé par le Système pour la diffusion des messages de proposition d'adhésion destinés aux usagers. L'adhésion ayant pour effet soit la désactivation des canaux de cette classe, soit de priver de suites les messages de l'espèce. Parallèlement l'adhésion aura pour effet l'activation du canal SMAP L sur les terminaux adhérents ; également elle pourra avoir pour effet l'activation du canal SMAP + si le gestionnaire choisi de n'activer ce canal que, sélectivement, sur les terminaux adhérents.
**d-** On désigne par « canal SMAP L » tout canal CBCH utilisé par le gestionnaire du Système pour la diffusion de messages logistiques ou d'information des adhérents, notamment des messages de sollicitation pour la mise à jour de leur identité SMAP.
**e-** On désigne par « canal SMAP PP » tout canal TCH utilisé pour véhiculer des messages « point à point » d'interpellation ou d'information personnalisés, à destination des usagers ou des adhérents.

### M- MOYENS D'ECHANGES D'INFORMATIONS MONO ET BIDIRECTIONNELS ENTRE PLATEFORME SMAP ET USAGERS OU ADHERENTS.

### 1-Le Module d'Interpellation Collectif (MIC) :

Il est l'outil principal par lequel le Système propose à tous les usagers du réseau, non encore adhérents, de façon récurrente et automatisée, d'adhérer au CB SMAP. A cette fin, il paramètre et initie la diffusion de messages CB (SMS, EME, MMS) **d'interpellation collectifs** au moyen des **Centrales CB** du réseau, en l'occurrence des messages de proposition d'adhésion au Système ; la réservation de ces messages aux seuls usagers non encore adhérents, suppose que l'adhésion ait pour premier effet ou bien, préférentiellement, la désactivation sur les Terminaux adhérents du canal CB utilisé pour la prospection (plusieurs procédures sont envisageables, (cf « c » ci-dessous), ou bien que les messages de prospection reçus par les usagers déjà adhérents soient reçus sans qu'aucune suite ne leurs soit donnée (cf. en C3 les rôles du MCR).

Par ailleurs, de façon générale, le MIC est dans le Système, **le destinataire des messages remontants émanant des usagers (réponses ou interpellations),** qu'il interprète et auxquelles il initie les suites à donner. Ainsi, sur ces mêmes registres (interrogation, enregistrement et interprétations des réponses, initiation des suites à leur donner), le MIC sera utilisé par le Système pour l'exécution de la fonction de Paramétrage. En outre ses capacités push-pull peuvent être mises à profit pour instrumenter diverses extensions du Système (cf. V ci-après).

Pour exécuter les fonctions qui lui sont dévolues, il organise la collaboration de diverses fonctionnalités plus élémentaires (ci-après dénommées sous-fonctions), et réalise leur intégration au Système. Ces sous-fonctions se résolvent toutes en des processus de traitement automatique de l'information exécutés au moyen d'outils de computation (logiciels et matériels), soit spécifiques, soit partagés avec d'autres fonctionnalités du Système (voire du réseau). Ce sont principalement :
**a- Une sous fonction de génération des messages CB d'interrogation ;** Elle a pour rôle de commander à la centrale CB, le balayage géographique planifié par le gestionnaire du Système, des messages (SMS, EMS, ou MMS) de proposition d'adhésion, sur canal CB dédié ou non, ici désigné **SMAP Zéro, et activé au démarrage du Système sur tous les Terminaux usagers du réseau.** La planification du gestionnaire est communiquée au Module de Coordination et d'Intégration du MIC via le Centre de Contrôle de Coordination de Gestion et d'Intégration du Système (cf. « E »).
   Les messages, alphanumériques ou vidéos (éventuellement binaires pour certaines fonctions logistiques), selon les standard du réseau, les choix du gestionnaire du Système et le type de tâche accomplie, sont enregistrés dans un **Catalogue des Messages**, fichier accessible au MIC, et couvrant ses besoins dans l'exécution de ses diverses fonctions : Prospection, Profilage, Animation de l'Espace SMAP, ... etc.
**b- Une sous fonction de réception et d'analyse des réponses** ; Quelque soit la procédure de questionnement ou d'interpellation mise en oeuvre (prospection, profilage ...etc.) et son mode de mise en oeuvre (ici le MIC, plus loin le MIP), elle appellera l'activation d'une **capacité de réponse** de la part de l'usager ou de l'adhérent. Cette capacité pourra revêtir différentes formes ; dans le cas de l'adhésion (cas ou le panel des réponse se réduit à une alternative binaire), tous les moyens de communication exploitant / usagers, en place dans le Réseau indépendamment du Système, en particulier les messagerie vocales ou alphanumérique, conversationnelles ou non, pourront être utilisés.
   Dans les cas plus complexes (cas du paramétrage notamment), il conviendra de recourir à un moyen interne au Système et qui lui soit spécifiquement adapté. Désignons par **« Module de Réponse Terminal (MRT) »** le dispositif logiciel chargé sur chaque portable adhérent consécutivement à son adhésion, auquel est confié ce rôle d' « interface réponse ». Il mettra en forme (de façon transparente pour l'usager) les éléments signifiants de la réponse, avec les paramètres nécessaires à son exploitation (code question, code adhérent, ... etc), et transmettra par SMS remontant le train d'informations ainsi constitué à un **Module d'Enregistrement, d'Identification et d'Orientation des Réponses (MEIOR)** commun à tous les contextes d'interrogation (MIC, MIP ; adhésion, paramétrage, animation de l'espace SMAP...), lequel le retransmettra au module destinataire pour exploitation.
**c- Une sous fonction « basculement du canal d'écoute CB »** ; Dès le démarrage du Système, toute réponse positive reçue par le MIC sur canal SMAP Zéro, aura pour effet, sur le terminal adhérent, d'inhiber ledit canal SMAP Zéro et d'activer un canal CB préférentiellement dédié SMAP, ici dénommé **SMAP L,** affecté dans le Système au messages logistiques descendants; ainsi les relances de proposition ne seront reçues que par les non adhérents. Différents modes de commande du basculement pourront être mis en oeuvre par la Plateforme SMAP : message de configuration OTA, usage du MCR, manipulation sur clavier du Terminal par l'adhérent ...
   Les cas d'intervention du MCR évoqués ci-dessus, impliquent évidemment que le MCR soit chargé sur le terminal, en réaction immédiate à son adhésion.

Les réponses négatives ou nulles (ou l'absence de réponse) seront sans autres effets que celui d'être enregistrées dans une mémoire de masse, **l'Archivage Historique des Echanges (AHE)** dont le rôle sera, en particulier, de permettre à l'exploitant de déférer à toute réquisition autorisée portant sur le contenu des échanges de toutes natures entre d'une part le Système et d'autre part les usagers ou les adhérents (aspects juridiques et contractuels). De surcroît, le AHE participe au fonctionnement du Module de Contrôle de Cohérence Interne des Séquences (cf. « F-2 »).

Enfin un Module de Coordination et d'Intégration du MIC assure la collaboration de ses différentes sous fonctions et organise ses relations au Système.

### 2- Le Module d'Interpellation Personnalisé (MIP).

**Une modalité d'interpellation optionnelle complémentaire,** convenant à une progression à la marge du nombre d'adhérents, sera mise en oeuvre par ce dispositif.

A cette fin, il offre la possibilité d'adresser des messages point à point, éventuellement personnalisés (évocation dans le message de certains des attributs de l'adhérent), au service de diverses fonctions de sophistication du Système.

**D'une capacité de prise de contact très inférieure (en termes de volume) aux diffusions réalisées par le MIC, il sera réservé à des procédures génératrices des trafics les plus faibles ou requerrant nécessairement des liaisons point à point. Citons :**
- Une phase optionnelle complémentaire du processus de prospection, qui pourra prendre le relais de la phase principale exécutée par le MIC, dès lors que le rendement de cette dernière serait devenu insuffisant du point de vue du gestionnaire, consécutivement à l'importance des adhésions déjà réalisées et, par voie de conséquence, à la petitesse de la cible résiduelle.
- La transmission des ordres d'inscription et de tenue à jour des identités SMAP à inscrire sur l'UIM des adhérents.
- Des rappels en cas d'absence de réponse à des questions concernant des « critères profil » impératifs.
- Des « rappels à l'ordre » consécutifs à des incohérences ou invraisemblances détectées par les détecteurs spécialisés dans le cadre des Fonctions d'Evaluation des Réponses Paramétrage.
- Des messages de convivialité personnalisés dans le cadre des Fonctions d'Animation de l'Espace SMAP.
- La demande du code postal (ou de l'adresse postale complète) du (des) domicile(s), en complément optionnel de la procédure collective diligentée au moyen du MIC.
- Quelques questions d'actualisation de l'« Identité SMAP » soustraites à la procédure MIC, de façon à conforter l'effet de rapprochement Système / usagers par les procédés de personnalisation permis par le MIP.
- etc... etc ...

Dans son organisation interne il comportera notamment:
**a-** Un **Coordinateur,** pour réceptionner et analyser les requêtes émanant des modules demandeurs via le C3GI (cf. « E »), gérer les files d'attentes, bâtir des programmes d'appels, saisir le générateur de messages et le générateur d'appels.
**b-** Un **Générateur de messages alphanumériques**, pour assembler, (à partir d'un répertoire d'éléments standard, d'éléments de personnalisation, et d'un corps de règle d'assemblage déclinés par type de procédure), les libellés des messages des différents types confiés au MIP.
**c-** Un **Générateur d'appels,** pour diligenter les programmes d'appels point à point, et adresser les messages au serveur SMS (éventuellement EMS, MMS) du réseau.

### IV- LA « SAISIE » DES ITINERANTS PAR LE SYSTEME.

Nous désignons par « itinérants » des usagers en déplacement hors de l'aire géographique de déserte de leur réseau d'abonnement, et situés provisoirement dans l'aire géographique couverte par le réseau d'accueil d'un système SMAP, réseau que nous qualifierons de « smapé visité». Cette situation est typiquement celle de visiteurs étrangers, **particulièrement les touristes,** vers lesquels le système SMAP peut -sous certaines conditions- diffuser sélectivement des informations spécifiques. Ces conditions de mise en oeuvre viseront à s'affranchir des lacunes actuelles de la standardisation des diffusions CB notamment des liaisons CBC / BSS (CBC / RNC dans le cas d'un réseau au standard UMTS). Par ailleurs, les itinérants n'étant -par nature- ni abonnés au réseau smapé visité, ni a fortiori les adhérents au Système dans sa mise en oeuvre par ledit réseau visité, ils ne seront pas, a priori, accessible au susdit Système. **Néanmoins, dans certains contextes opérationnels, la mise en oeuvre d'un système SMAP à destination des itinérants peut être pratiquée simplement.**

En effet, s'il existe des accords de roaming entre les deux réseaux et si le réseau d'abonnement de l'itinérant est lui-même smapé des accords de compatibilité et de facilitations réciproques peuvent être passés entre les deux réseaux, de sorte que chacun d'eux soit en mesure de saisir les itinérants abonnés de l'autre réseau, qu'ils soient ou non déjà adhérents à un système SMAP sur leur propre réseau d'abonnement. Ces accords devront porter non seulement sur l'harmonisation des caractéristiques techniques CB des deux réseaux, mais également sur la compatibilité des deux systèmes SMAP (plateformes et modules terminaux), l'une et l'autre démarches parfaitement réalisables dans le cadre d'initiatives bilatérale. Les accords pourront également porter sur des échanges de prestations ; ainsi, dans les cas ou l'itinérant ne serait pas adhérent à une plateforme SMAP de son réseau d'abonnement, le télé chargement des modules SMAP sur son IUM (au moins pour la durée de l'itinérance) pourrait être pris en charge par le réseau d'abonnement à la demande du réseau smapé visité consécutivement à l'acceptation par l'itinérant du service « SMAP Itinérant » accueilli par ce réseau smapé visité.

Par ailleurs diverses adaptations des fonctionnalités du Système à la problématique particulière de la saisie des itinérants peuvent être envisagées ; elles pourront, soit donner lieu à la constitution d'un sous-système « SMAP Itinérant », dans le contexte d'un système SMAP standard tel que décrit aux I, II, III ci-dessus, et partageant avec ce dernier divers éléments fonctionnel de sa plateforme ; soit constituer un système SMAP indépendant, spécialisé dans la saisie des itinérants.

Ainsi, une fonction spécifique de Prospection / Adhésion peut être instrumentée, avec des objectifs identiques à ceux mentionnés au § A. Les adaptations sus évoquées concerneront éventuellement la constitution d'un RIA (Répertoire des Itinérants Adhérents) distinct du RA, et de son système d'exploitation, étant entendu qu'un Répertoire des Adhérents unique peut, à la condition d'être organisé en conséquence traiter les deux types d'adhésion. Les adaptations concerneront également la teneur des interpellations (langue et contenu de l'offre d'adhésion).

De même en ce qui concerne l' « identité SMAP Itinérant », deux types de spécificités devront être introduites :
- en premier lieu l'adjonction d'un code d'identification du réseau d'abonnement, ainsi que la mention de la(les) langue(s) à utiliser pour les informations à diffuser à l'itinérant adhérent;
- de plus, le motif du déplacement (tourisme, affaires, étude ...) sera un caractère nouveau et majeur ; il n'y aura que des avantages à simplifier la typologie des autres caractères codifiés dans l'identité ; en particulier, les caractères de « rattachement géographique » ainsi que ceux de « diffusion fermée » perdront l'essentiel de leur intérêt.

### V- DES OPPORTUNITES D'EXTENSIONS POUR LE SYSTEME.

**Elles consistent à utiliser certaines des fonctionnalités du Système SMAP au service de prestations payantes ou gratuites, complémentairement aux prestations gratuites standard du SMAP.** Ces pratiques, extérieures au Système SMAP proprement dit, devraient générer des volumes de chiffre d'affaire significatifs. Nous revendiquons les suivantes :
**1- Des formules de « services SMAP à la carte »** fondée sur l'exploitation des possibilités offertes par la **« Messagerie SMAP ».** Elles abandonnent la diffusion CB pour recourir à des transmissions point à point :
   - Soit l'abonné aura la possibilité de consulter à volonté, par un échange pull / push, à son initiative, les messages « vivants » inscrit dans la mémoire centralisée de la Messagerie SMAP, et cela pour les cellules et les rubriques qui l'intéresseront ;
   - Soit la plateforme SMAP sera dotée des moyens qui lui permettront (corrélativement aux diffusions du Service SMAP proprement dit) de transmettre systématiquement point à point, aux « abonnées payants à la carte », les messages relatifs aux rubriques et aux cellules de rattachement qu'ils auront choisies.
**2-** Un résultat comparable pourra être atteint en conservant partiellement la diffusion CB. Dans ce cas l' « identité SMAP » de l'abonné se composera essentiellement de la mention de son abonnement à ce service particulier. Le tri des informations à enregistrer par le terminal selon les rubriques choisies, et leur ordonnancement selon les « cellules de rattachement » qu'elles concernent, sera opéré au niveau de chaque terminal abonné (groupe de fonction K).

Dans un « model business » tel que celui-ci, qui implique l'obligation contractuelle de toucher tous les abonnés au service, diverses stratégies de diffusion peuvent être envisagées, nous proposons :
- dans le cas d'un effectif important et réparti d'abonnés au service, une diffusion CB étendue à tout le territoire ; pourrait se poser alors le problème des abonnés sortis du territoire couvert par le réseau et impliquant, pour qu'il reçoive le message-client des accords de « roaming » spécifiques, qu'il reste cependant à imaginer, instrumenter et mettre en place.
- plus vraisemblablement, la diffusion CB sera limitée aux cellules de base comportant les densités de présence les plus élevées ; les abonnés situés hors de ces cellules étant servis par une séquence complémentaire de messages « point à point ».
**NB :** Dans les exemples ci-dessus la facturation à l'abonné serait justifiée principalement par la capacité, qui lui serait dévolue, de sélectionner les rubriques consultées, latitude incompatible avec le modèle du tiers payant, et potentiellement ruineuse pour ce dernier si elle devait lui être associée dans des conditions tarifaires inadéquates. Il s'agira donc de définir l'optimum tarifaire du point de vue global.

Accessoirement, la tarification rémunèrera également, l'affranchissement de ces services à l'égard des contraintes d'horaire auxquelles se trouve soumis le produit standard.

Citons encore divers produits tels que, **sondages d'opinion, marketing direct, concours d' idées, des consultations limitées ou non à un sous ensemble d'usagers d'opportunité ou permanent ... etc,** susceptibles d' utiliser les **capacités d' échange « push pull »** dont dispose la plateforme SMAP (notamment pour assurer les fonctions B et C).

## Revendications

1. Procédé global de diffusion d'informations, désigné ci-après par « le Système », **caractérisé en se qu**'il permet à un réseau de téléphonie cellulaire - quelque soit son standard , GPS, GPRS, E-GPRS, UMTS, notamment - équipé d'une centrale Cell broadcast et, optionnellement, d'une plateforme de configuration « OTA »- de procéder à des diffusions de messages CB (SMS, EMS, MMS) -les « messages-clients »- dont la réception est limité à un sous-ensemble d'usagers du réseau - le «sous-ensemble cible »- résultant, en premier lieu, d'une procédure d'adhésion au Système, en second lieu d'une géolocalisation des diffusions réservant ces dernières aux terminaux mobiles situés dans certaines cellules de base du réseau d'accueil constitutives de l' « aire géographique ciblée », ce second facteur de sélection étant inhérent aux diffusions Cell Broadcast, et en troisième lieu, d'une procédure de sélection opérée au sein des adhérents ainsi concernés par leur situation géographique lors de la diffusion CB, sélection opérée sur la base d'une série de critères sociologiques et personnels choisis au cas par cas par le commanditaire de chaque diffusion au sein d'un panel prédéfini par le gestionnaire du Système ; étant entendu que :
- la réservation de la diffusion du message-client aux seuls usagers appartenant au sous-ensemble cible, sera obtenu par l'activation préalable, commandée à distance par le Système, sur les terminaux concernés, du canal d'écoute CB du message-client à suivre ;
- que la dite commande à distance sera opérée par le moyen d'un message CB, préférentiellement binaire, dit de « marquage », diffusé à l'intérieur des cellules de base de l'aire géographique ciblée, sur canal CB préférentiellement BCCH du réseau d'accueil, activé en permanence sur les terminaux adhérents, le dit message de marquage étant essentiellement porteur de la séquence codifiée des critères sociologiques et personnels choisis par le commanditaire du message client, laquelle séquence est dénommée « identité SMAP ciblée» ;
- que, suite à leur adhésion, les UIM des adhérents se trouvent équipés d'un ensemble logiciel et connectique dénommé Moyen de Configuration Résident (MCR), apte à reconnaître le message de marquage, à comparer la ou les identités SMAP ciblées avec la collection codifiée des caractères sociologiques et personnels de l'adhérent récepteur, collection préalablement mémorisée sur son UIM et dénommée « identité résidente » de l'adhérent, et en cas d'une correspondance au moins entre identités ciblées et identité résidente, à activer le canal d'écoute CB du message-client à suivre ;
- que plusieurs messages-clients enchaînés en une séquence unique peuvent être diffusés suite à un unique message de marquage ;
- que, à l'issu de la réception du message-client (ou de la séquence de messages-clients), le MCR désactive le canal CB utilisé ;

2. Dispositif selon les revendications 1 **caractérisé en ce que** le MCR SMAP se présente sous la forme d'un ensemble articulé de logiciels spécialisés, inscriptible sur l'UIM des terminaux adhérents, et programmé pour réaliser au moins les deux types d'opérations suivants :
- Relayer auprès des modules concernés du terminal, des ordres d'inscription ou d'effacement d'information sur certaines zones mémoires gérées par ledit terminal.
- Relayer auprès du sous-ensemble synthétiseur du terminal des ordres d'activation ou de désactivation de certains canaux d'écoute CB ;
...étant entendu que les ordres des deux catégories susmentionnées, pourront lui être transmis, soit par le sous-ensemble radio, soit par une manipulation clavier, soit encore d'un de ses propres sous modules spécialisés.

3. Procédé selon la revendication 1, **caractérisé en ce que** les « critères sociologiques et personnels » relèvent de trois catégories distinctes » : une série de critères dits de « profil» , des critères de « rattachement géographique de l'usager, des critères d' « appartenance à tel ou tel sous-ensemble prédéterminé d'usagers », étant entendu que chacune de ces trois catégories peut être utilisée seule, associée à l'une des deux autres, ou associée aux deux autres.

4. Procédé selon la revendication 3, **caractérisée en ce que** la sélection par « rattachement géographique de l'adhérent » à pour effet de réserver la diffusion des informations aux seuls adhérents ayant déclaré l'existence d'un rapport d'intérêt personnel ou objectif que ces adhérents auront reconnu à certaines localisations géographiques (domiciliation principale, intérêt professionnel, familial, résidence secondaire, ...), étant entendu, d'une part, que les rapports d'intérêt sus visés devront être choisis au sein d'un catalogue élaboré par le gestionnaire du Système, et d'autre part que tout mode d'acquisition de ces localisation(s), traduites ou à traduire en cellules de base du réseau, peut être utilisé au bénéfice du Système, y compris le Système lui-même par utilisation de moyens spécialisés évoqués dans la description, notamment le Moyen d'Interpellation Collectif (MIC) et le Moyen d'Interpellation Personnalisé (MIP) décrit au « M » de la description.

5. Procédé selon les revendications 3, **caractérisé en ce que** l'usage de critères d' « appartenance à tel ou tel sous-ensemble prédéterminé d'usagers » permet de réserver la configuration de marquage aux seuls adhérents appartenant à un sous-ensemble répertorié par le gestionnaire du Système, étant entendu que cette appartenance pourra être soit signifiée au gestionnaire du Système par les adhérents eux-mêmes, chacun pour ce qui le concernera, soit, globalement, par une tierce personne autorisée, particulièrement le client commanditaire.

6. Procédé selon les revendications 1, 3, 4, 5, **caractérisé en ce** chaque valeur ou détermination de chacun des critères des trois catégories possibles (valeur ou critère dénommée « attribut », peut être exprimé selon divers « modes d'expression », dont le mode « positif », le mode « négatif », le mode « indifférent », le mode « forcé », ces dénominations ayant les significations exposées au « C1 c » de la description.

7. Procédé selon les revendications 1,3, 4, 5, **caractérisé en ce que**, au fur et à mesure du recueil des attributs de tous caractères relatifs aux adhérents, se trouve constitué et mis à jour en continu le Répertoire des Adhérents Profilé et Classé par Cellule de Domiciliation (RAP/CD), base de données permettant en particulier de dresser la liste des adhérents possédant une identité SMAP conforme à une identité ciblée donnée.

8. Dispositif de mise en oeuvre des revendications 1 et 7 , dénommé Module d'interrogation Collectif (MIC), **caractérisé en ce qu'**il dispose des moyens de requérir de la centrale CB qu'elle diffuse de façon récurrente sur canaux CBCH désignés SMAP Zéro SMAP L, respectivement aux usagers non adhérents et aux adhérents, des messages d'interpellation (SMS, EMS, ou MMS), destinés dans le premier cas à obtenir des usagers leur adhésion au Système, et dans le second cas à obtenir des adhérents qu'ils communiquent les valeurs ou déterminations de leurs attributs de tous types.

9. Dispositif de mise en oeuvre des revendications 6 et 7 , dénommé Module d'Interpellation Personnalisé (MIP), complémentaire du MIC, ayant les mêmes fonctions que ce dernier, **caractérisé en ce qu'**il opère par message « point à point », soit en relais du MIC dés lors que la densité des flux des mouvements à diligenter sera inférieure à un seuil déterminé par le gestionnaire, soit pour assurer tout échange point à point d'informations de nature logistique entre le Système d'une part, et l'usager ou l'adhérent d'autre part - tels que ceux énumérés au « A-3 » de la description.

10. Procédé selon les revendications précédentes, **caractérisé en ce que** les annonces concernant chaque adhérent au Système se trouvent mémorisées sur le terminal correspondant, mémorisation limitée dans le temps à une « durée de vie » fixée par le client-commanditaire, permettant ainsi la constitution et l'entretien d'un « turn-over » d'annonces « vivantes » consultables en permanence par l'adhérent destinataire.

11. Procédé selon la revendication 5, **caractérisé en ce qu'**il dote le Système d'une Fonction d'Evaluation des Performances de la Sélection par Domiciliation (FEP SD), dont l'objet est d'évaluer en continu l'efficience de la sélection par domiciliation (Indice de performance = nombre de sélections au titre de la seule domiciliation / nombre de présents, pour une aire géographique donnée, sur un créneau temporel donné).

12. Dispositif de mise en oeuvre de la revendication précédente, dénommé « Module d'Evaluation des Performances de la Sélection par Domiciliation (MEP SD), **caractérisé en ce qu'** il est constitué comme indiqué au paragraphe « G » de la description.

13. Dispositif de mise en oeuvre de la revendication précédente, dénommé Table des Usagers Localisé classés par Zone de localisation (TUL/Z), consistant en un fichier « temps réel », constitué et mis à jour sur la base des informations de localisation du (des) HLR et des VLR du réseau, permettant d'accéder en temps réel au sous-ensemble instantané des usagers du réseau situés dans telle ou telle zone géographique, constituée par une ou plusieurs zones de localisation du réseau.

14. Procédé selon les revendications 7, 8, 9, **caractérisé en ce qu'**il dote le Système d'une fonction d'analyse des réponses des usagers aux questions relatives à leur profil, destinée à évaluer la vraisemblance de chaque réponse prise isolément, selon le principe énoncé au paragraphe « F-1 » de la description.

15. Procédé selon les revendications 7, 8, 9, **caractérisés en ce qu'**il dote le Système d'une fonction d'analyse des réponses des adhérents aux questions relatives à leur profil, destinée à détecter d'éventuelles incohérences dans la série des réponses concernant un même attribut pour un même usager, selon les principes indiqués au paragraphe « F-2 ».

16. Procédé selon les revendications 1 et 3, **caractérisé en ce qu'**il consiste en une « Incitation tarifaire à utiliser la sélection profil », de nature à dissuader les clients-commanditaires à être insuffisamment sélectifs dans leurs ciblages, pratique qui serait dommageable pour l'image du Système, et mise en oeuvre selon les principes exposés au H de la description.

17. Procédé selon les revendications précédentes, dénommé « Messagerie SMAP », **caractérisé en ce qu'**il consiste à enregistrer tous les messages-client dans une base spécialisée de la plateforme SMAP, tout le temps de leur « durée de vie », de sorte que les adhérents à qui ils étaient destinés, mais qui pour diverses raisons ne les auraient pas reçus, soient néanmoins en mesure de les consulter par une action d'appel à leur initiative.

18. Dispositif de mise en oeuvre de la revendication précédente, dénommé « Base d'Enregistrement des Messages-Client (BEMC) », **caractérisé en ce qu'**il est constitué d'une capacité mémoire dynamique et de son système de gestion, installée au sein de la plateforme SMAP, sur lequel se trouve enregistré, corrélativement à leur diffusion, classés par cellule cible, l'intégralité des messages-clients diffusés, quelques soient leur standard, cet enregistrement étant limité dans le temps à la « durée de vie du message » choisie par le client-commanditaire.

19. Dispositif de mise en oeuvre de la revendication 18, dénommé « Module de Messagerie Adhérent (MMA), **caractérisé en ce qu'**il consiste en un ensemble logiciel inscrit sur l'IUM des adhérents consécutivement à leur adhésion, interlocuteur de la BEMC dans le fonctionnement de la messagerie SMAP, et chargé d'exécuter les fonctions élémentaires énumérées au « J » de la description.
